Europäisches Patentamt

European Patent Office

Office européen des brevets

(19)

(11) Publication number: **0 090 394**
**A1**

(12) **EUROPEAN PATENT APPLICATION**

(21) Application number: **83103062.2**

(22) Date of filing: **28.03.83**

(51) Int. Cl.³: **B 29 D 9/00**

---

(30) Priority: **29.03.82 FI 821090**

(43) Date of publication of application: **05.10.83**
**Bulletin 83/40**

(84) Designated Contracting States: **AT BE CH DE FR GB LI NL SE**

(71) Applicant: **SUPERBOARDS OY, Sähköttäjänkatu 6c, SF-00520 Helsinki 52 (FI)**

(72) Inventor: **Nuorivaara, Michael, Gallen-Kallelantie 7, SF-02600 Espoo 60 (FI)**

(74) Representative: **Nettleton, John Victor et al, Abel & Imray Northumberland House 303-306 High Holborn, London, WC1V 7LH (GB)**

---

(54) **A method for producing and/or reinforcing sailboard.**

(57) The invention relates to a method for producing and/or reinforcing a sailboard. According to the invention grooves (6) are worked on an essentially straightly cut blank (1) which grooves are packed with a reinforcing material and a curable binding material, the board blank is bent to a desired form and kept in that form till the binding material has been cured. The finishing works may be performed thereafter in a conventional manner. When ready boards are reinforced, the grooves (6) are also worked on the surface of the board and filled with a curable binding agent, even though it is not necessary always to bend the board, at least not as strongly as when a new board is produced. Because the form of the board is effected by bending and not like before by shaping directly from the block of starting material, the consumption of the material has been decreased to about ⅓ part and additionally the time which is consumed when the blank is worked is decreased to even just ¹⁄₁₀ of the time consumed according to the state of the art wherein working is made very carefully and sometimes also tediously by working hard reinforcing wooden strips or the like which have been sunk to soft polystyrene or the like.

A method for producing and/or reinforcing sailboard

The present invention relates to a method for producing and/or reinforcing a sailboard whereby a completely new board may be produced or a ready board may be reinforced, the latter being, for instance, tired in the use and thus needs reinforcing.

A producing method of a sailboard in "make it yourself" manner is nowadays such that polystyrene or corresponding cell plastic material block is formed into a board of the desired form. The block from which the board is formed must be approximately the same length as the board which is formed from the same, the breadth must approximately correspond to the breadth of the intended board and in the respect of the height the minimum demand is a height which corresponds to the height measured from the bottom of the board to the upper edge of the front part which is curved upwards. If one thinks that the question is about a normal board the length which is about three meters, the breadth which is about 70 centimeters and the height of the curved part of the front part from the bottom to the upper edge is about 30 centimeters, a simple calculation gives about 630 liters block of polystyren which is used when the forming of the board is begun. Because polystyren or some other polymer material which is used is in normal conditions insufficient in respect of the strength, the intended board must be reinforced to bear the strains directed on it. According to the state of the art reinforcing is done by sawing the blank which has been formed ready in the longitudinal direction and normally symmetrically in respect of the central line by the aid of two cuts into three parts, wooden strips which are as long as the board are glued instead of the cuts which strips are shaped to the form of the board and parts are glued thereafter to their places. Because no kind of prestress is formed in the board by the above method, the board becomes in no circumstances completely rigid.

Setting the parts to their places and glueing the parts
to each other succeeds completely very seldom. So material must be removed from those places where it is in
excess and additionally material must be set to those
places where material exists too little. It is, however,
normally done so that material is removed so much that
the best pospel result is gained. When, for example,
polystyren and some considerably harder material like
wood or in some special cases some other reinforcing
material joining to polystyren is worked it is easy to
imagine that working is not too easy. The reason for this
is that the worker must be all the time very careful with
respect to the soft polystyren and this causes that the
reinforcing material cannot be grindered, cut or strongly
worked in some other manner. Making a sailboard by a
method described above is therefore working which demands
very much time.

Extra time is demanded in excess of the above steps when
one certain polymer material is used which material, on
the other hand, is very suitable for the purpose but
which is sold in so small pieces that normally six pieces
must be glued into each other before a block big enough
has been gained for shaping the board. Glueing is
performed normally with epoxy glue which is also hard and
makes the further working more difficult.

It is customary that when sailboards are manufactured in
industrial scale a cover and a bottom are made separately
and combined to each other whereafter the thus formed
cavity is sprayed with polymeric filling. Spaces through
which the filling material has not been squeezed may be
left in this kind of board whereby the board is very weak
in those places. Additionally, the filling material may
be loosen from the cover or the bottom or from both and
especially this happens during the winter when strong shrinking happens which causes that the board becomes weaker than before and that water may be gut into the cavities to increase the weight of the board and to amend its characteristics.

The purpose of this invention is to simplify the working procedure and to save in such a way working time and, on the other hand, to decrease the amount of material to be used, as is shown later, into a third part from the material consumed according to the method described above. This is effected by the method described in the attached patent claims.

It has been realized according to the invention that very simple and at the same time genious matter that polymer material or other material which is suitable for the corresponding use may be bent. Bending of polystyren, for instance, succeeds very well even though polystyren is essentially completely reversable material. So it has been realized according to the invention that bending must be remained in some way and this has been accomplished in this special case advantageously by using a curable binding material together with a reinforcing cloth, net, or the like.

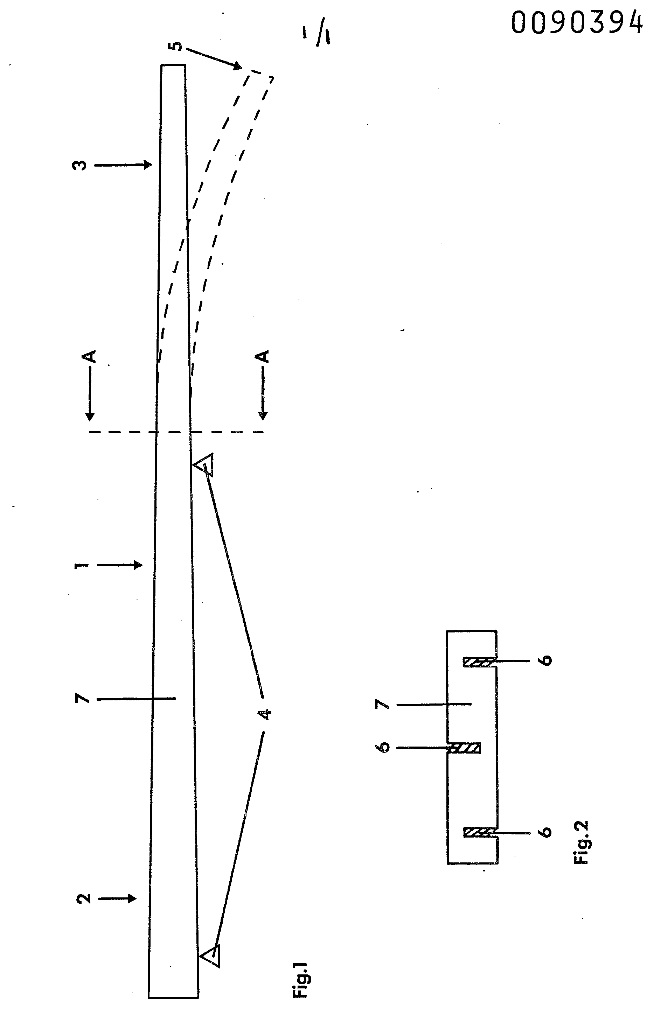

The invention is described in the following closer by referring to the attached drawings in which figure 1 shows a schematic side view of the sailboard blank according to the invention, and figure 2 shows, also as a schematic section view the section A-A in figure 1.

It is shown in figure 1 a sailboard blank 1 which is a block of polystyrene, polyurethane or some other corresponding suitable material 7, which has been cut with even cuts. Cutting may be performed advantageously already in the factory so that the essential forms of the sailboard become directly to the blank. It is possible to show as an example that the back end 2 of the sailboard on which the sailor normally stands is about 50 centimeters thick and the front end 3 is again about five centimeters thick. The other dimensions may be, for example, same as was shown before when the state of the art was described, i.e. the length may be about three meters and the breadth about 70 centimeters. It is received as a result of a simple calculation that the volume of the said block is about 210 liters or exactly one third part of the volume of the starting block according to the state of the art.

It is proceeded in the following way according to the invention: longitudinal grooves are worked through the blank 1 of the sailboard which has been rounded in its edges or pretreated by some other way, which grooves in the lower surface of the sailboard follow advantageously the forms of the outer edges of the sailboard at a distance from the same and on the upper surface they are, for example, directly parallel to the longitudinal direction of the sailboard. Working may be effected with, for example, a hot wire cutter, a slotting saw, and electric disc saw suitable for the use or with some other apparatus with which soft plastic material may be worked. The form of the groove is not critical, but in some cases it may be of advantage to use, for example, a groove which gets broader towards the center of the sailboard or to shape groove in some other suitable way. Thereafter, for example, glass fiber cloth, or some other known reinforcing material known in the art is packed to the groove rith the aid of a suitable narrow tool, which reinforcing material has been impregnated, for instance, with an epoxy binding agent which is cured in a relatively short period. Tixotropic agents may be mixed to the binding agent.

In the following step the front part of the sailboard is shaped desirably. This happens simply so that the board is supported on its lower surface along a distance long enough as has been shown in figure 1 as an example by a reference number 4 and the supporting is also effected on
the upper surface so that the board keeps essentially
rigidly in its place. A suitable weight is thereafter
hanged on the front part 3 of the board or the front part
3 is pressed from above with the aid of a suitably shaped
tool whereby the front part is bent downwards as has been
shown by dotted lines in figure 1. The bent front part
has been designated in figure 1 by the reference number
5. The board is supported to the desired position for a
time long enough so that the, for example epoxy binding
material packed to the grooves 6 is cured, whereby it is
received a board which has a desired shape and stiffened
into its form especially by the aid of the prestress
caused to the board and which board may be finished by a
method known in the art. The prestress is caused because
the polymeric material tends to return to its original
form against the stiffener. Prestressing is of big value
as a stiffener of the board.

Finishing is effected, for example, in the following
manner: The corners of the sailboard blank 1 are rounded
in some degree especially on the upper surface of the
board, whereafter some suitable net or some other
reinforcing cloth is put on the surface of the board and
on the same is sprayed a surface material which is
normally of epoxy base. Finishing grindering and other
measures which are conventional in the art like decorative painting etc. are performed when the surface material has been dried. The reinforcing cloth or net is spread
to the surface advantageously so that it reaches to the
sides of the board as two layers or the spreading is
effected, for instance, with the aid of two separate
cloths so that both are spread in their edges beyond the
sides of the boarder.

Grooving and reinforcing which happens by the aid of
grooves like happens according to the invention may be
used very well also when ready boards are reinforced cover material whereby the board has become such that it changes its form too strongly and so it has become useless in practice. The procedure is essentially the same as the method for reinforcing a new board as described above. So grooves are worked into the ready board with the aid of suitable tools and the grooves may be straight or they may follow the forms of the board especially on the lower surface of the board like was described in connection with the producing of a new board. The board may be bent, if necessary, to cause some prestress to the board. The deforming of the new board when it is bent is, however, quite small. Reinforcing cloth or net impregnated with a curable binding agent or corresponding material may be packed to the grooves. Binding material is used in the grooves in such an amount that they become essentially completely filled with binding material. The traces which are formed during reinforcing may be especially easily covered completely by adding a decorative tape on the sawn groove or by painting a decorative painting on the same.

How much reinforcing parts are needed in the board depends on the intended use of the board. It may be regarded as a minimum demand that at least two reinforcements are situated on the lower surface of the board and at least one reinforcement on the upper surface of the board. It is clear that reinforcements are added, for instance, around the fastening points of the mast and also in the back part of the board on those places where the sailor normally stands.

The amount, the length, or the breadth of the reinforcements according to the invention and the form of the same have no restrictions because the grooves may be worked into a desired place as broad or as long as is desired and they may be worked into a desired form. The grooves may be worked into a desired depth even though grooving through the board is not desirable at least not along a long way.

As has been shown in the above specification before the method according to the invention is the clear improvement in the art because material saving and especially also saving in the working time is gained by the aid of the present method. As it was shown above the material saving is considerable. Normally not more than one third part of the material volume which is used according to the state of the art is used. It has been discovered in the practice that the working time which is used for producing the sailboard blank according to the invention for the finishing covering is only 1/10 part of that time which is used for the corresponding measure according to the state of the art. Because this stage has previously been very demanding, it is now possible to make it very easily and quickly, which considerably increases the production rate.

Claims

1. A method for producing and/or reinforcing a sailboard, characterized in that it is shaped a blank (1) the dimensions of which approximately correspond to the dimensions of a ready board, at least one groove (6) is worked on at least one of the surfaces, the grooves are packed with a curable binding agent and eventually with reinforcement and the blank (1) is bent into a desired form where it is let to be till the binding agent has been cured.

2. A method according to claim 1, characterized in that polystyrene, polyurethane or other corresponding plastics material is used as a blank material and that an epoxy type material is used as the curable binding agent.

3. A method according to claim 1 or 2, characterized in that at least two grooves (6) are worked on the lower surface of the blank (1) and at least one groove on the upper surface of the same, whereby the grooves (6) on the lower surface follow the forms of the outer edges of the board at a distance from the same and the grooves (6) on the upper surface are straight.

4. A method according to any of the preceding claims, characterized in that the grooves (6) are worked on the surface of a ready board, bending is performed, if necessary, and the binding agent is let to cure to stiffen a board which is tired in the use and which is too much deformable.

5. A method according to claim 1 or 4, characterized in that the grooves (6) are in the form of a rectangle, whereby that end of the rectangle which is towards the center of the board is eventually broadened.

**Fig.1**

**Fig.2**

0090394

## DOCUMENTS CONSIDERED TO BE RELEVANT

EP 83103062.2

| Category | Citation of document with indication, where appropriate, of relevant passages | Relevant to claim | CLASSIFICATION OF THE APPLICATION (Int. Cl. ³) |
|---|---|---|---|
| A | FR - A - 1 582 581 (PUGET)<br>* Totality *<br>-- | 1-3,5 | B 29 D  9/00 |
| A | AT - B - 362 143 (PICHLER)<br>* Totality *<br>---- | 1 | |

TECHNICAL FIELDS
SEARCHED (Int. Cl. ³)

B 29 C 17/00
B 29 D  9/00
B 29 D 27/00
B 63 B 35/72

The present search report has been drawn up for all claims

| Place of search | Date of completion of the search | Examiner |
|---|---|---|
| VIENNA | 09-06-1983 | MAYER |